(19) Europäisches Patentamt
European Patent Office
Office européen des brevets

(11) EP 0 535 464 B1

(12) # EUROPÄISCHE PATENTSCHRIFT

(45) Veröffentlichungstag und Bekanntmachung des Hinweises auf die Patenterteilung:
**28.02.1996 Patentblatt 1996/09**

(51) Int Cl.$^6$: **C08L 69/00**, C08K 5/42
// (C08L69/00, 71:02)

(21) Anmeldenummer: **92115971.1**

(22) Anmeldetag: **18.09.1992**

(54) **Verwendung von kern-aromatischen Sulfonsäureestern zur Stabilisierung von thermoplastischen Polycarbonaten gegen Einwirkung von Gammastrahlen**

Use of ring-aromatic sulphonic acid esters to stabilise thermoplastic polycarbonates against gamma radiation

Utilisation d'esters d'acides sulfoniques aromatiques pour la stabilisation de polycarbonates thermoplastiques contre l'action de radiation gamma

(84) Benannte Vertragsstaaten:
**BE DE FR GB IT NL**

(30) Priorität: **01.10.1991 DE 4132629**

(43) Veröffentlichungstag der Anmeldung:
**07.04.1993 Patentblatt 1993/14**

(73) Patentinhaber: **BAYER AG**
**D-51368 Leverkusen (DE)**

(72) Erfinder:
- **Grigo, Ulrich, Dr.**
  **W-4152 Kempen 3 (DE)**
- **Kirsch, Jürgen, Dr.**
  **W-5090 Leverkusen 1 (DE)**
- **Idel, Karsten-Josef, Dr.**
  **W-4150 Krefeld (DE)**
- **Lundy, Charles, Dr., Miles Inc.**
  **Pittsburgh, PA 15219-2502 (US)**

(56) Entgegenhaltungen:
**EP-A- 0 228 525**
**EP-A- 0 296 473**
**EP-A- 0 359 366**
**FR-A- 2 256 216**
**FR-A- 2 396 045**
**US-A- 4 804 692**

- **PATENT ABSTRACTS OF JAPAN, Band 14, Nr. 143 (C-703)(4086), 19. März 1990**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 535 464 B1

Printed by Jouve, 75001 PARIS (FR)

## Beschreibung

Gegenstand der vorliegenden Erfindung sind thermoplastische Polycarbonate mit einem Gehalt von 0,1 Gew.-% bis 10,0 Gew.-%, vorzugsweise von 0,1 Gew.-% bis 5,0 Gew.-%, bezogen auf Gewicht Polycarbonat, an Polyalkylenoxiden der Formel (I)

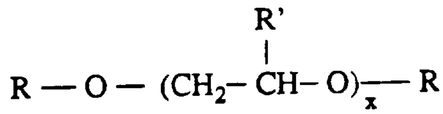

(I),

worin

R H, $C_1$-$C_6$-Alkyl, Tetrahydropyranyl oder ein Silyl-Rest,
R' H oder $C_1$-$C_6$-Alkyl und
x eine ganze Zahl von 1 bis 100 sind,

und mit einem Gehalt von 0,1 Gew.-% bis 10 Gew.-%, vorzugsweise von 0,1 Gew.-% bis 5,0 Gew.-%, bezogen wiederum auf Gewicht Polycarbonat, aromatischen Verbindungen, die Sulfonsäureester-Substituenten haben.

Die erwähnte Kombination der Zusätze stabilisiert das Polycarbonat gegen die Einwirkung von Gamma-Strahlen, so daß aus diesen Polycarbonaten hergestellte Formkörper als sterilisierbare Geräte, beispielsweise in der Medizin, verwendet werden können.

Die thermoplastischen Polycarbonate sind aufgrund ihrer physikalischen Eigenschaften für Anwendungen im medizinischen Bereich geeignet Für diese Anwendungen ist es wichtig, daß die entsprechenden Artikel und Formkörper aus den thermoplastischen Polycarbonaten sterilisierbar sein müssen, und zwar beliebig oft, ohne daß sie dabei abgebaut werden. Die Sterilisierung erfolgt hierbei durch Bestrahlung mit Gamma-Strahlen, da die Behandlung mit Wasserdampf die Polycarbonate auf Dauer schädigt.

Die Bestrahlung mit Gamma-Strahlen verursacht jedoch auf Dauer ebenfalls eine Schädigung der Polycarbonate, indem diese gelb gefärbt werden. Durch die erfindungsgemäße Verwendung von aromatischen Sulfonsäureester-Verbindungen wird diese Schädigung durch Gamma-Strahlen weitgehend unterdrückt.

Es gibt verschiedene Methoden, die thermoplastischen Polycarbonate gegen die Einwirkung von Gamma-Strahlen resistent zu machen (siehe beispielsweise EP-A-0 296 473, US-PS 4 804 692 und US-PS 4 963 598

Bekannt ist auch der kombinierte Einsatz von Polyalkylenoxiden und halogenisierten Polycarbonaten zur Stabilisierung von halogenfreien Polycarbonaten gegen die Einwirkung von Gamma-Strahlen (siehe EP-A-0 376 289).

Bekannt ist außerdem, Polyalkylenoxiden Spinnlösungen von Polycarbonaten zuzusetzen, um deren Kristallisation zu fördern (siehe US-PS 3 385 814).

Aromatische Sulfonsaüreester-Verbindungen sind als Weichmacher in Polycarbonaten bekannt (siehe US-A-4143023). Ferner sind Sulfonsäuresalze als Flammschutzmittel bekannt (siehe US-PS 4 880 855, US-PS 4 579 896, US-PS 4 535 108 und US-PS 4 001 185). Die aromatischen Sulfonsäuresalze haben geringere Wirkung gegen Gamma-Strahlen im Vergleich zu aromatischen Sulfonsäureester-Derivaten.

Die kombinierte Wirkung der beiden erfindungsgemäßen Komponenten auf die Stabilität von thermoplastischen Polycarbonaten gegen die Einwirkung von Gamma-Strahlen ist somit weder bekannt noch naheliegend.

Die erfindungsgemäß zu stabilisierenden thermoplastischen Polycarbonate sind literaturbekannt.

Erfindungsgemäß zu stabilisierende Polycarbonate sind thermoplastische, aromatische Homopolycarbonate und Copolycarbonate, denen z.B. ein oder mehrere der folgenden Diphenole zugrundeliegen:

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
$\alpha,\alpha'$-Bis-(hydroxyphenyl)-diisopropylbenzole

sowie deren kernalkylierte und kernhalogenierte Verbindungen. Diese und weitere geeignete Diphenole sind z.B. in den

US-Patentschriften 3 028 365, 3 275 601, 3 148 172, 3 062 781, 2 991 273, 3 271 367, 2 999 835, 4 982 014 und 2 999 846, in den deutschen Offenlegungsschriften 1 570 703, 2 063 050, 2 063 052, 2 211 956, 2 211 957, der franz. Patentschrift, 1 561 518 und in der Monographie "H. Schnell, Chemistry and Physics of Polycarbonates, Interscience Publishers, New York, 1964" beschrieben.

Bevorzugte Diphenole sind z.B.:

4,4'-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan
α,α'-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-methan
Bis-(3,5-Dimethyl-4-hydroxyphenyl)-sulfon
2,4-Bis-(3,5-dimethyl-4-hydroxyphenyl)-2-methylbutan
1,1-Bis(3,5-dimethyl-4-hydroxyphenyl)-cyclohexan
α,α'-Bis-(3,5-dimethyl-4-hydroxyphenyl)-p-diisopropylbenzol
2,2-Bis-(3,5-dichlor-4-hydroxyphenyl)-propan und
1,1-Bis-(4-hydroxyphenyl)-3,3,5-trimethylcylohexan.

Besonders bevorzugte Diphenole sind z.B.:

2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan und
1,1-Bis-(4-hydroxyphenyl)-3,3,5-trimethyl-cyclohexan.

Bevorzugte aromatische Polycarbonate sind solche, denen ein oder mehrere der als bevorzugt genannten Diphenole zugrundliegen. Besonders bevorzugt werden Copolycarbonate, denen 2,2-Bis-(4-hydroxyphenyl)-propan und eines der anderen als besonders bevorzugt genannten Diphenole zugrundeliegen. Besonders bevorzugt sind weiterhin Polycarbonate allein auf Basis von 2,2-Bis-(4-hydroxyphenyl)-propan oder 1,1-Bis-(4-hydroxyphenyl)-3,3,5-trimethylcyclohexan.

Die aromatischen Polycarbonate können nach bekannten Verfahren hergestellt werden, so z.B. nach dem Schmelzumesterungsverfahren aus Bisphenol und Diphenylcarbonat und dem Zweiphasengrenzflächenverfahren aus Bisphenolen und Phosgen, wie es in der obengenannten Literatur beschreiben ist.

Die aromatischen Polycarbonate können durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen, beispielsweise solchen mit drei oder mehr als drei phenolischen Hydroxygruppen verzweigt sein.

Polycarbonate dieser Art sind z.B. in den deutschen Offenlegungsschriften 1 570 533, 1 595 762, 2 116 974, 2 113 347, der britischen Patentschrift 1 079 821, der US-Patentschrift 3 544 514 und in der deutschen Offenlegungsschrift 2 500 092 beschrieben.

Einige der verwendbaren Verbindungen mit drei oder mehr als drei phenolischen Hydroxygruppen sind beispielsweise Phloroglucin, 4,6-Dimethyl-2.4.6-tri-(4-hydroxyphenyl)-hepten-2, 4.6-Dimethyl-2.4.6-tri-(4-hydroxyphenyl)-heptan, 1.3.5-Tri-(4-hydroxyphenyl)-benzol, 1.1.1-Tri-(4-hydroxyphenyl)-ethan, Tri-(4-hydroxyphenyl)-phenylmethan, 2.2-Bis-[4.4-bis-(4-hydroxyphenyl)-cyclohexyl]-propan, 2.4-Bis-(4-hydroxyphenyl-isopropyl)-phenol, 2.6-Bis-(2'-hydroxy-5'-methyl-benzyl)-4-methylphenol, 2-(4-Hydroxyphenyl)-2-(2.4-dihydroxyphenyl)-propan, Hexa-(4-(4-hydroxyphenylisopropyl)phenyl)-ortho-terephthalsäureester, Tetra-(4-hydroxyphenyl)-methan, Tetra-(4-(4-hydroxyphenylisopropyl)-phenoxy)-methan und 1.4-Bis-((4'.4''-dihydroxytriphenyl)-methyl)-benzol. Einige der sonstigen dreifunktionellen Verbindungen sind 2.4-Dihydroxybenzoesäure, Trimesinsäure, Cyanurchlorid und 3.3-Bis-(4-hydroxy-3-methyl-phenyl)-2-oxo-2,3-dihydroindol.

Die aromatischen Polycarbonate sollen in der Regel mittlere Gewichtsmittel-Molekulargewichte $\overline{M}_w$ von 10 000 bis über 200 000, vorzugsweise von 20 000 bis 80 000 haben, ermittelt durch Messungen der rel. Viskosität in $CH_2Cl_2$ bei 25°C und einer Konzentration von 0,5 g in 100 ml $CH_2Cl_2$.

Zur Einstellung des Molekulargewichts $\overline{M}_w$ der Polycarbonate werden in bekannter Weise Kettenabbrecher, wie

beispielsweise Phenol oder Halogenphenole oder Alkylphenole in den berechneten Mengen eingesetzt.

Geeignete Polyalkylenoxide (I) sind beispielsweise Polypropylenglykole mit $\overline{M}_n$, gemessen nach GPC, zwischen 500 und 3500, die mit Dihydropyranendgruppen ausgestattet sind.

Die Einarbeitung der Polyalkylenoxide (I) in die thermoplastischen Polycarbonate erfolgt in bekannter Weise.

Geeignete aromatische Verbindungen mit Sulfonsäureester-Substituenten sind vorzugsweise solche der Formeln (II), (III), (IV) und (V)

$$R''O\text{-}O_2S\text{-}Ar_1\text{-}SO_2\text{-}OR''' \qquad (II)$$

$$Ar_2\text{-}SO_2\text{-}OR'' \qquad (III)$$

$$R''\text{-}O_2S\text{-}O\text{-}Ar_3\text{-}O\text{-}SO_2\text{-}R''' \qquad (IV)$$

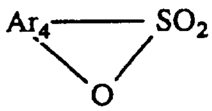

(V).

$Ar_1$ ist ein zweibindiger, einkerniger, aromatischer Rest mit 6 bis 20 C-Atomen, oder ein zweikerniger Rest der Formel

$$\text{-}Ar'\text{-}M_1\text{-}Ar'\text{-},$$

worin

$Ar'$ ein Phenylen-Rest ist, der Alkyl- oder Halogen-Substituenten tragen kann,

$M_1$ ist ein $C_1$-$C_5$-Alkyliden, ein Rest der Formel

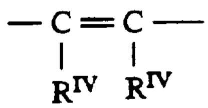

$R^{IV}$ H oder $C_1$-$C_4$-Alkyl,

$M_1$ ist außerdem $\text{-}SO_2\text{-}$, -S-oder

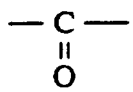

.

$Ar_2$ ist ein einbindiger, einkerniger aromatischer Rest mit 6 bis 20 C-Atomen, der noch 1 bis 2 Alkylsubstituenten haben kann,

$Ar_3$ ist ein zweibindiger, einkerniger, aromatischer Rest mit 6 bis 20 C-Atomen, der noch 1 bis 2 Alkylsubstituenten haben kann, oder ein zweikerniger Rest der Formel $Ar'\text{-}M_2\text{-}Ar'$, worin

$Ar'$ ein Phenylenrest ist, der Halogen- oder Alkyl-Substituenten haben kann und

$M_2$ ist ein $C_1$-$C_5$-Alkyliden, $\text{-}SO_2\text{-}$, -S-oder

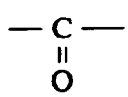

.

$Ar_3$ kann auch der zweibindige Phenolphthalein-Rest

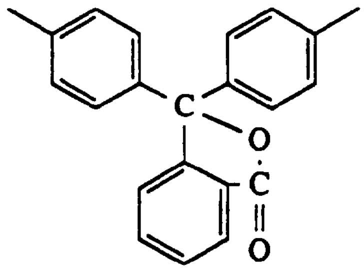

sein.

$Ar_4$ ist ein einkerniger, aromatischer $C_6$-$C_{20}$-Rest.

R" und R''' sind in allen Fällen der Formeln (II), (III) und (IV) $C_1$-$C_{10}$-Alkyl, $C_5$-$C_6$-Cycloalkyl, $C_6$-$C_{10}$-Aryl, $C_7$-$C_{10}$-Aralkyl, Cl oder Br.

Geeignete Beispiele für (II) sind:

4,4'-Phenyl-disulfonsäurephenylester
Naphthyl-disulfonsäurephenylester
4,4,-Diphenylsulfon-disulfonsäurephenylester
4,4'-Benzophenon-disulfonsäurephenylester
4,4'-Benzyldisulfonsäure-phenylester.

Geeignete Beispiele für (III) sind:

Benzosulfonsäure-phenylester
Toluolsulfonsäure -phenylester
Naphthylsulfonsäure-phenylester.

Geeignete Beispiele für (IV) sind:

Bisphenol-A-dibenzolsulfonsäureester
Phenolphthalein-dibenzolsulfonsäureester
Tetrabrom-bisphenol-A-dibenzolsulfousäureester
Sulfonylbisbenzol-dibenzolsulfonsäureester.

Geeignetes Beispiel für (V) ist:
1,8-Naphthsulton.

Die Einarbeitung der aromatischen Verbindungen mit Sulfonsäureestersubstituenten in die thermoplastischen Polycarbonate erfolgt ebenfalls in bekannter Weise.

Gegenstand der vorliegenden Erfindung ist somit auch ein Verfahren zur Herstellung der erfindungsgemäßen Mischungen, das dadurch gekennzeichnet ist, daß man in thermoplastische Polycarbonate Polyalkylenoxide der Formel (I) in Mengen von 0,01 Gew.-% bis 10,0 Gew.-%, vorzugsweise von 0,1 Gew.-% bis 5,0 Gew.-%, bezogen auf Gewicht Polycarbonat, und aromatische Verbindungen, die Sulfonsäureester-Substituenten haben, in Mengen von 0,01 Gew.-% bis 10,0 Gew.-%, vorzugsweise von 0,1 Gew.-% bis 5,0 Gew.-%, bezogen auf Gewicht Polycarbonat, simultan oder sukzessive über die Polycarbonatschmelze oder über eine Lösung des Polycarbonats in bekannten inerten Lösungsmitteln zudosiert und die erhaltenen Mischungen, gegebenenfalls nach Verdampfen des Lösungsmittels, abkühlt und granuliert oder sogleich zu Formkörpern verspritzt oder Folien vergießt.

Gegenstand der vorliegenden Erfindung sind außerdem Stabilisatorkombinationen von Polyalkylenoxiden der Formel (I), in Mengen von 0,01 Gew.-Teilen bis 10,0 Gew.-Teilen, vorzugsweise von 0,1 Gew.-Teilen bis 5,0 Gew.-Teilen, mit aromatischen Verbindungen, die Sulfonsäureester-Substituenten haben, in Mengen von 0,01 Gew.-Teilen bis 10,0 Gew.-Teilen, vorzugsweise von 0,1 Gew.-Teilen bis 5,0 Gew.-Teilen, wobei die Gew.-Teile der Komponenten innerhalb des definierten Bereichs unabhängig voneinander beliebig gewählt sein können.

Den erfindungsgemäß zu stabilisierenden Polycarbonaten können noch die üblichen Additive wie Entformungsmittel, Weichmacher, Füllstoffe und Verstärkungsstoffe in bekannter Weise zugesetzt sein.

Die Verarbeitung der erfindungsgemäß stabiliserten Polycarbonate zu Formkörpern der verschiedensten Art kann in bekannter Weise durch Extrusion oder Spritzguß erfolgen.

Gegenstand der vorliegenden Erfindung sind somit auch Polycarbonatformkörper, hergestellt aus den erfindungsgemäßen Mischungen.

Geeignete, in der Medizin einsetzbare Formkörper sind beispielsweise Leitungen für die Sauerstoffzuführ im Blut, Gefäße für die Nierendialyse, Schlauchverbindungen und Herzsonden.

Gegenstand der vorliegenden Erfindung ist somit auch die Verwendung der erfindungsgemäßen Polycarbonat-Formkörper zur Herstellung von sterilisierbaren Geräten.

Die Behandlung der stabilisierten Polycarbonat-Formkörper mit Gamma-Strahlen erfolgt beispielsweise durch Bestrahlung mit einem 2 MeV van de Graff Generator. Diese Strahlungsquelle ist gemaß den DIN-Vorschriften geeicht. Eine Dosis von 30 kGy (3 Mrad) kann innerhalb von 6 Minuten aufgebracht werden. Der Generator erzeugt einen Elektronenstrom von 100 µA. Im Material wird der Energieverlust der Elektronen hauptsächlich durch Ionisation, aber auch durch Bremstrahlung bewirkt. Der direkte Zugriff auf die Strahlungsquelle erlaubt die physikalische Untersuchung der Proben direkt nach der Bestrahlung (hier treten die größten Änderungen auf). Außerdem ist von Vorteil, daß hier die Strahlungsparameter variiert werden können. Bei kommerzieller Strahlensterilisation sind solche Variationen schwierig.

## Beispiele

Eingesetzte Komponenten:

1. Benzol-disulfonsäurephenylester
2. Phenolphthalein-diphenylsulfonsäureester
3. Diphenylsulfon-diphenylsulfonsäureester
4. 1,8-Naphthsulton
5. Diphenylsulfonsulfonat, Natriumsalz
6. Dihydropyran-terminiertes Polypropylenoxid der Formel

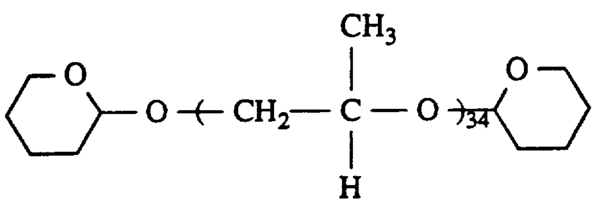

mit einem Mn von 2000 (Zahlen Mittelmolekulargewicht, gemessen beispielsweise durch GPC), dessen Herstellung in der EP-OS 0 286 473, Beispiel 1, beschrieben ist.

Alle Komponenten wurden in Bisphenol A-Polycarbonat mit Phenolendgruppen und Mw von 28 000 eingesetzt.

## Beispiel 1

Eine typische Zubereitung der Sulfonsäureester ist wie folgt. 94,11 g Phenol wurden in 2000 ml $MeCl_2$ gelöst und verrührt. 202,30 g Triethylamin wurden hinzugegeben. Nach Stickstoff-Abblasung wurden 70,1 g 1,3-Benzo-disulfonylchlorid langsam zugetropft. Die Lösung wurde für 2 Stunden verrührt. Das Produkt wurde von der Lösung ausgefällt und wurde mit Wasser gewaschen. Der Schmelzpunkt liegt bei 78°C.

## Beispiel 2

Die Additive wurden durch Mischextrusion in ein Polycarbonatharz eingearbeitet und anschließend verspritzt Die Spritzteile wurden mit 3,0 Mrad bestrahlt. Danach wurde die Radikalkonzentration und die Vergilbungszahl über einen Zeitraum von 10 Tagen gemessen. In Tabelle 1 sind die Vergilbungszahlen und Delta Vergilbungszahlen angegeben, die für die Polycarbonate und die additivhaltigen Zusammensetzung an Folien mit einer Dicke von 4 mm jeweils 0 Stunden und 10 Tage nach Bestrahlung gemessen wurden.

Tabelle 1

| Zusammensetzung | VZ (0 Stunden) | VZ (10 Tagen) | Delta VZ |
|---|---|---|---|
| Polycarbonat,* Kontrol | 5,7 | 26,0 | 20,3 |
| 0,5 % Komp. 1* | 24,1 | 32,9 | 8,8 |
| 1,0 % Komp. 1* | 23,6 | 30,6 | 7,0 |
| 0,5 % Komp. 1, 0,5 % Komp. 6 | 8,8 | 17,5 | 8,7 |
| 1,0 % Komp. 1, 1,0 % Komp. 6 | 8,5 | 14,5 | 6,0 |
| 1,0 % Komp. 2* | 11,9 | 28,0 | 16,1 |
| 1,0 % Komp. 2 1,0 % Komp. 6 | 8,1 | 14,0 | 5,9 |
| 1,0 % Komp. 4* | 7,0 | 23,9 | 16,9 |
| 1,0 % Komp. 4, 1,0 % Komp. 6 | 4,2 | 9,8 | 5,6 |
| 1,0 % Komp. 6* | 8,3 | 20,1 | 11,8 |

* Vergleichsversuch

Tabelle 2 zeigt die Verbesserung der Sulfonsäureester im Vergleich zu Sulfonsäuresalzen.

Tabelle 2

| Zusammensetzung | VZ (0 Stunden) | VZ (10 Tagen) | Delta VZ |
|---|---|---|---|
| Polycarbonat, Kontrol | 5,7 | 26,0 | 20,3 |
| 1,0 % Komp. 3* | 10,5 | 27,2 | 16,7 |
| 1,0 % Komp. 3, 1,0 % Komp. 6 | 8,1 | 14,0 | 5,9 |
| 1,0 % Komp. 5* | 15,2 | 36,8 | 21,6 |
| 1,0 % Komp. 5,* 1,0 % Komp. 6 | 8,4 | 21,4 | 13,0 |
| 1,0 % Komp. 6* | 8,3 | 20,1 | 11,8 |

* Vergleichsversuch

## Patentansprüche

1. Thermoplastische Polycarbonate mit einem Gehalt von 0,01 Gew.-% bis 10 Gew.-%, bezogen auf Gewicht Polycarbonat, an Polyalkylenoxiden der Formel (I)

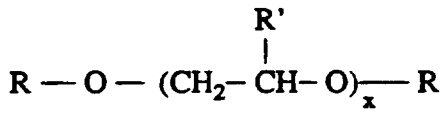

(I),

worin

R H, $C_1$-$C_6$-Alkyl, Tetrahydropyranyl oder ein Silyl-Rest,

R' H oder $C_1$-$C_6$-Alkyl und

x eine ganze Zahl von 1 bis 100 sind,

und mit einem Gehalt von 0,1 Gew.-% bis 10 Gew.-%, bezogen wiederum auf Gewicht Polycarbonate, an aromatischen Verbindungen, die Sulfonsäureester-Substituenten haben.

2. Verfahren zur Herstellung der Mischungen des Anspruchs 1, dadurch gekennzeichnet, daß man in thermoplastische Polycarbonate die Polyalkylenoxide der Formel (I) und die aromatischen Verbindungen, die Sulfonsäureester-Substituenten haben, in den im Anspruch 1 angegebenen Gewichtsmengen, simultan oder sukzessive über die Polycarbonatschmelze oder über eine Lösung des Polycarbonats in bekannten inerten Lösungsmitteln zudosiert und die erhaltenen Mischungen, gegebenenfalls nach Verdampfen des Lösungsmittels, abkühlt und granuliert, oder zu Formkörpern verspritzt oder zu Folien vergießt

3. Stabilisatorkombinationen von Polyalkylenoxiden der Formel (I)

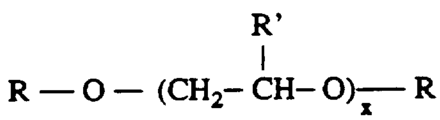

(I),

worin

R H, $C_1$-$C_6$-Alkyl, Tetrahydropyranyl oder ein Silyl-Rest,

R' H oder $C_1$-$C_6$-Alkyl und

x eine ganze Zahl von 1 bis 100 sind,

in Mengen von 0,01 Gew.-Teilen bis 10 Gew.-Teilen mit aromatischen Verbindungen, die Sulfonsäureester-Substituenten haben, in Mengen von 0,01 Gew.-Teilen bis 10,0 Gew.-Teilen, wobei die Gew.-Teile der Kombination innerhalb des definierten Bereichs unabhängig voneinander beliebig gewählt sein können.

4. Polycarbonatformkörper, hergestellt aus den Mischungen des Anspruchs 1.

5. Verwendung der Polycarbonatformkörper des Anspruchs 4 zur Herstellung von sterilisierbaren Geräten.

## Claims

1. Thermoplastic polycarbonates containing 0.01% by weight to 10.0%, by weight based on the weight of polycarbonate, of polyalkylene oxides corresponding to formula (I):

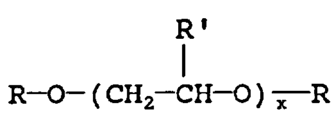

(I)

in which

R represents H, $C_{1-6}$ alkyl, tetrahydropyranyl or a silyl radical,
R' represents H or $C_{1-6}$ alkyl and
x is an integer of 1 to 100,

and 0.1% by weight to 10% by weight, again based on the weight of polycarbonate, of aromatic compounds bearing sulfonic acid ester substituents.

2. A process for the production of the mixtures claimed in claim 1, characterized in that the polyalkylene oxides of formula (I) and the aromatic compounds bearing sulfonic acid ester substituents are incorporated in thermoplastic polycarbonates in the quantities by weight according to claim 1 either simultaneously or successively via the polycarbonate melt or via a solution of the polycarbonate in known inert solvents and, optionally after evaporation of the solvent, the mixtures obtained are cooled and granulated or extruded to mouldings or cast to films.

3. Stabilizer combinations of polyalkylene oxides corresponding to formula (I):

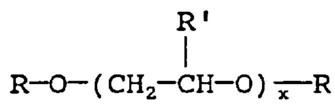 (I)

in which

R represents H, $C_{1-6}$ alkyl, tetrahydropyranyl or a silyl radical,
R' represents H or $C_{1-6}$ alkyl and
x is an integer of 1 to 100,

in quantities of 0.01 part by weight to 10.0 parts by weight with aromatic compounds bearing sulfonic acid substituents in quantities of 0.01 part by weight to 10.0 parts by weight, the parts by weight of the components being selectable as required independently of one another within the defined range.

4. Polycarbonate mouldings produced from the mixtures claimed in claim 1.

5. The use of the polycarbonate mouldings claimed in claim 4 for the production of sterilizable instruments.

**Revendications**

1. Polycarbonates thermoplastiques présentant une teneur de 0,01 à 10 % en poids, rapporté au poids du polycarbonate, en oxydes de polyalkylène de formule (I)

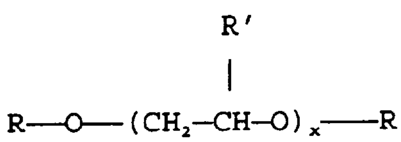 (I),

où

R désigne H, un alkyle en $C_1$-$C_6$, le tétrahydropyrannyle ou un radical silyle,

R' désigne H ou un alkyle en $C_1$-$C_6$, et

x désigne un nombre entier de 1 à 100,

et une teneur de 0,1 à 10 % en poids, rapporté une fois encore au poids des polycarbonates, en composés aromatiques substitués au moyen d'esters d'acides sulfoniques.

2. Procédé de préparation des mélanges selon la revendication 1, caractérisé en ce que les oxydes de polyalkylène

de formule (I) et les composés aromatiques substitués au moyen d'esters d'acides sulfoniques sont additionnés, simultanément ou successivement, à des polycarbonates thermoplastiques soit fondus soit dissous dans des solvants inertes connus, dans les quantités en poids indiquées à la revendication 1, et en ce que les mélanges obtenus sont refroidis et granulés, éventuellement après évaporation du solvant, ou transformés en produits moulés par injection ou en feuilles par coulage.

**3.** Compositions stabilisatrices à base d'oxydes de polyalkylène de formule (I)

$$R-O-(CH_2-\overset{\overset{\displaystyle R'}{|}}{C}H-O)_x-R \qquad (I),$$

où

R désigne H, un alkyle en $C_1$-$C_6$, le tétrahydropyrannyle ou un radical silyle,

R' désigne H ou un alkyle en $C_1$-$C_6$, et

x désigne un nombre entier de 1 à 100,

dans des quantités de l'ordre de 0,01 à 10,0 parties en poids, et de composés aromatiques substitués au moyen d'esters d'acides sulfoniques, dans des quantités de l'ordre de 0,01 à 10,0 parties en poids, les parties en poids des composants pouvant prendre n'importe quelle valeur, indépendamment les unes des autres, à l'intérieur de la plage définie.

**4.** Produits moulés en polycarbonate préparés à partir des mélanges selon la revendication 1.

**5.** Utilisation des produits moulés en polycarbonate selon la revendication 4 pour préparer des instruments stérilisables.